# EUROPÄISCHE PATENTANMELDUNG

(11) **EP 4 269 463 A1**
(43) Veröffentlichungstag der Anmeldung: **01.11.2023**
(21) Anmeldenummer: 22170067.7
(22) Anmeldetag: 26.04.2022
(51) Int. Cl.: C08G 18/48, C08G 18/72, C08G 18/76, C08J 9/12, C08J 9/14

(54) **DIMENSIONSSTABILE OFFENZELLIGE FEINZELLIGE POLYURETHAN-HARTSCHAUMSTOFFE**

(71) Anmelder: Covestro Deutschland AG, 51373 Leverkusen (DE)
(72) Erfinder: Goldbach, Verena, 50825 Köln (DE); Goecdue, Hueseyin, 51061 Köln (DE); Raps, Daniel, 51427 Bergisch Gladbach (DE)
(74) Vertreter: Levpat

(57) **Zusammenfassung**

Die vorliegende Erfindung betrifft dimensionsstabile offenzellige, feinzellige Polyurethan-Hartschaumstoffe, Verfahren zu ihrer Herstellung und ihre Verwendung.

## Beschreibung

Die vorliegende Erfindung betrifft dimensionsstabile offenzellige, feinzellige Polyurethan-Hartschaumstoffe, Verfahren zu ihrer Herstellung und ihre Verwendung.

Die Polyurethan-Hartschaumstoffe können neben Urethangruppen (PUR) auch Isocyanuratgruppen (PIR) enthalten. In dieser Anmeldung sind mit der Bezeichnung Polyurethan-Hartschaumstoff bzw. PUR/PIR-Hartschaumstoff sowohl Hartschaumstoffe, welche im Wesentlichen Urethangruppen aufweisen, als auch Hartschaumstoffe enthaltend sowohl Urethan- als auch Isocyanuratgruppen gemeint, falls nicht anders angegeben.

Polyurethan-Hartschaumstoffe sind seit langem bekannt. Ein wesentliches Einsatzgebiet ist die Temperaturisolierung. Dabei gewinnt die Anwendung von Vakuumisolationspaneelen (VIP) enthaltend Polyurethan-Hartschaumstoffe zur Isolierung zunehmend an Bedeutung. Auf die Isolationseigenschaften von für die Vakuumisolation eingesetzten Schäumen hat die Schaumqualität entscheidenden Einfluss: zum einen sind eine möglichst kleine Zellgröße und möglichst homogene Zellgrößen vorteilhaft, zum anderen ist ein hoher Anteil an offenen Zellen günstig, um den Schaum gut evakuieren zu können.

Die Herstellung von offenzelligen Polyurethan-Hartschaumstoffen ist ebenfalls prinzipiell bekannt. Im Allgemeinen werden dem Reaktionsgemisch bestimmte, zellöffnende Substanzen zugegeben, um eine Öffnung der Zellen beim Schaumprozess zu bewirken.

WO 2018/162372 A1 offenbart ein Verfahren zur Herstellung eines feinzelligen, offenzelligen Polyurethan-Hartschaumstoffs. Hierbei wird ein überkritisches CO₂ enthaltendes Reaktionsgemisch unter Gegendruck in ein Werkzeug eingebracht und schlagartig entspannt. Durch die besondere Zusammensetzung des Reaktionsgemischs werden Schaumstoffe besonders niedriger Dichte, hoher Offenzelligkeit und niedriger Zellgröße erhalten.

Ein Problem offenzelliger Hartschaumstoffe, die in VIP eingesetzt werden, ist die mangelnde Stabilität gegenüber erhöhter Temperatur. Typischerweise wird in offenzelligen Hartschaumstoffen in VIP bei deren Herstellung ein Innendruck im Bereich von 0,1 bis 3 mbar erzeugt. Den aus dem Stand der Technik bekannten offenzelligen Hartschaumstoffen mangelt es insbesondere im evakuierten Zustand - das heißt bei Drücken von 0,03 bis 20 mbar, insbesondere 0,1 bis 3 mbar - an Dimensionsstabilität bei Lagerung bei erhöhter Temperatur, das heißt bei wenigstens 30 °C, zum Beispiel 50 bis 100 °C, oder bei wenigstens 60 °C, zum Beispiel 60 bis 100 °C und Umgebungsdruck, das heißt 980 bis 1050 mbar.

Aufgabe der vorliegenden Erfindung war es daher, offenzellige PUR/PIR-Hartschaumstoffe bereitzustellen, die im evakuierten Zustand unter erhöhter Temperatur dimensionsstabil bleiben. Besonders vorteilhaft sind hierbei PUR/PIR-Hartschaumstoffe mit erhöhter Druckfestigkeit.

Überraschenderweise konnte die Aufgabe gelöst werden durch ein Verfahren zur Herstellung eines PUR/PIR-Hartschaumstoffs umfassend die Schritte
i. Herstellen eines Reaktionsgemischs R) umfassend
   - eine gegenüber Isocyanaten reaktive Zusammensetzung A) umfassend
      eine Polyolkomponente A1) mit einer Funktionalität f von > 2,5 umfassend wenigstens ein Polyetherpolyol, Polyesterpolyol, Polycarbonatpolyol, Polyether-Polycarbonatpolyol, Polyetheresterpolyol, oder Mischungen daraus,
      gegebenenfalls eine Katalysatorkomponente A2),
      gegebenenfalls eine Hilfs- und Zusatzkomponente A3);
   - eine Polyisocyanatkomponente B); und
   - eine Treibmittelkomponente C) umfassend CO₂ im überkritischen Zustand,
ii. Einbringen des Reaktionsgemischs R) aus Schritt i. in eine geschlossene Form, wobei ein Gegendruck in der geschlossenen Form während des Einbringens 2,0 - 90 bar beträgt,
iii. Aufschäumenlassen des Reaktionsgemischs R) in der geschlossenen Form, um den PUR/PIR-Hartschaumstoff zu erhalten und
iv. Entformen des PUR/PIR-Hartschaumstoffs,
wobei die Polyisocyanatkomponente B) in einer Menge eingesetzt wird, so dass die Isocyanat-Kennzahl wenigstens 110 beträgt und/oder die Polyisocyanatkomponente B) eine Viskosität bei 25 °C von ≥ 400 mPa·s und einen NCO-Gehalt ≤ 31,3% aufweist.

In einem Schritt i. wird also ein Reaktionsgemisch hergestellt, indem als Treibmittel wenigstens CO₂ im überkritischen Zustand, eine gegenüber Isocyanaten reaktive Zusammensetzung A) und eine Polyisocyanatkomponente B) miteinander vermischt werden. Die gegenüber Isocyanaten reaktive Zusammensetzung A) umfasst hierbei wenigstens eine Polyolkomponente A1) mit einer Funktionalität von 2,5 umfassend wenigstens ein Polyetherpolyol, Polyesterpolyol, Polycarbonatpolyol, Polyether-Polycarbonatpolyol, Polyetheresterpolyol, oder Mischungen daraus. Weiterhin können eine Katalysatorkomponente A2), eine Hilfs- und Zusatzkomponente A3) oder sowohl eine Katalysatorkomponente A2) als auch eine Hilfs- und Zusatzkomponente A3) in der Zusammensetzung A) enthalten sein. Schließlich können auch niedermolekulare gegenüber Isocyanaten reaktive Verbindungen A4) und/oder weitere gegenüber Isocyanaten reaktive Verbindungen A5) wie Graft-Polyole, Polyamine, Polyaminoalkohole und Polythiole in der Zusammensetzung A) enthalten sein. Denkbar sind hier alle Kombinationen von A1) mit A2), A3), A4) und/oder A5), also A1) mit A2); A1) mit A3); A1) mit A4); A1) mit A5); A1) mit A2) und A3); A1) mit A2) und A4); A1) mit A2) und A5); A1) mit A3) und A4); A1) mit A3) und A5); A1) mit A4) und A5); A1) mit A2), A3) und A4); A1) mit A2), A3) und A5); A1) mit A2), A4) und A5); A1) mit A3), A4) und A5).

In einem Schritt ii. wird das in Schritt i. erhaltene Reaktionsgemisch in eine geschlossene Form eingebracht, wobei in dieser ein Gegendruck von 2,0 bis 90 bar herrscht.

In einem Schritt iii. lässt man das Reaktionsgemisch in der geschlossenen Form aufschäumen und erhält dadurch den PUR/PIR-Hartschaumstoff.

In einem Schritt iv. entformt man den PUR/PIR-Hartschaumstoff.

Im Sinne dieser Anmeldung bedeutet die Angabe eines NCO-Gehalts in % den Anteil der NCO-Gruppen in Gew.-% an dem Stoff oder Stoffgemisch, auf den sich die Angabe des NCO-Gehalts bezieht.

In einer Ausführungsform beträgt der Anteil aller in der Polyolkomponente A1) vorhandenen primären OH-Funktionen an der Gesamtzahl der endständigen OH-Funktionen in der Polyolkomponente A1) mindestens 30%.

In einer Ausführungsform stehen die Anzahl der NCO-Gruppen in der Polyisocyanatkomponente B) und die Anzahl der gegenüber Isocyanaten reaktiven Wasserstoffatome der gegenüber Isocyanaten reaktiven Zusammensetzung A) in einem Zahlenverhältnis von ≥ 110:100 bis ≤ 300:100 zueinander.

In einer weiteren Ausführungsform ist das Reaktionsgemisch R) im Wesentlichen frei von zellöffnenden Verbindungen oder enthält keine zellöffnenden Verbindungen. Der Ausdruck "im Wesentlichen frei von" bedeutet hierbei, dass das Reaktionsgemisch R) zellöffnende Verbindungen höchstens in einer Menge enthält, die einer unbeabsichtigten Verunreinigung entspricht, z.B. weniger als 0,1 Gew.-%, bezogen auf die Gesamtmenge der gegenüber Isocyanaten reaktiven Zusammensetzung A.

In einer weiteren Ausführungsform findet Schritt i) unter für das CO₂ überkritischen Bedingungen statt. In einer bevorzugten Ausführungsform finden sowohl Schritt i. als auch Schritt ii. unter für das CO₂ überkritischen Bedingungen statt.

In einer weiteren Ausführungsform wird in Schritt iii. der Gegendruck für einen Zeitraum 1 von 1 - 40 s nach Ende des Schritts ii. gehalten und anschließend der Gegendruck während eines Zeitraums 2 mit einer Druckentlastungsrate von 1-90 bar/s entlastet wird.

In einer weiteren Ausführungsform weist die Polyolkomponente A1) eine Hydroxylzahl von 280-600 mg KOH/g, gemessen nach DIN 53240-2:2007, auf.

In einer Ausführungsform besteht die gegenüber Isocyanaten reaktive Zusammensetzung A) zu mindestens 65 Gew.-% aus der Polyolkomponente A1), die eine Hydroxylzahl zwischen 280 bis 600 mg KOH/g, gemessen nach DIN 53240-2:2007, und eine Funktionalität von ≥ 2,8 bis ≤ 6,0 aufweist. In einer weiteren Ausführungsform beträgt der Anteil der in der gegenüber Isocyanaten reaktiven Zusammensetzung A) vorhandenen primären OH-Funktionen an der Gesamtzahl aller endständigen OH-Funktionen in der gegenüber Isocyanaten reaktiven Zusammensetzung A mindestens 35%. In einer bevorzugten Ausführungsform besteht die gegenüber Isocyanaten reaktive Zusammensetzung A) zu mindestens 65 Gew.-%, bezogen auf die Gesamtmenge an A) ausgenommen A2) und A3), aus der Polyolkomponente A1), die eine Hydroxylzahl zwischen 280 bis 600 mg KOH/g, gemessen nach DIN 53240-2:2007, und eine Funktionalität von ≥ 2,8 bis ≤ 6,0 aufweist und beträgt der Anteil der in der gegenüber Isocyanaten reaktiven Zusammensetzung A) vorhandenen primären OH-Funktionen an der Gesamtzahl aller endständigen OH-Funktionen in der gegenüber Isocyanaten reaktiven Zusammensetzung A mindestens 35%.

In einer weiteren Ausführungsform besteht die gegenüber Isocyanaten reaktive Zusammensetzung A) zu mindestens 60 Gew.-% aus Polyetherpolyol.

Die gegenüber Isocyanaten reaktive Zusammensetzung A) enthält mindestens eine Polyolkomponente A1) ausgewählt aus der Gruppe bestehend aus Polyetherpolyolen, Polyesterpolyolen, Polyetheresterpolyolen, Polycarbonatpolyolen und Polyether-Polycarbonatpolyolen.

Der Anteil an primären OH-Funktionen an der Gesamtzahl der endständigen OH-Funktionen in der Polyolkomponente A1) beträgt bevorzugt mindestens 30%, mehr bevorzugt mindestens 35%, insbesondere bevorzugt mindestens 38%.

Die Polyolkomponente A1) zeichnet sich weiterhin dadurch aus, dass sie eine Funktionalität f von > 2,5, bevorzugt ≥ 2,6 bis ≤ 6,5 und besonders bevorzugt ≥ 2,8 bis ≤ 6,1 aufweist. Mit gegenüber Isocyanaten reaktiven Zusammensetzungen, in denen die Polyolkomponente A1) eine Funktionalität in diesen Bereichen aufweist, wird beim Einspritzen ein optimaler Viskositätsanstieg bis zur Entspannung des Gegendrucks gefunden und lassen sich die Schäume schneller entformen.

Die Polyolkomponente A1) weist bevorzugt eine Hydroxylzahl von 280 - 600 mg KOH/g, besonders bevorzugt von 300 - 580 mg KOH/g und insbesondere bevorzugt von 350 - 540 mg KOH/g auf. Dies wirkt sich besonders günstig auf die mechanischen Eigenschaften der Schäume aus.

Im Sinne dieser Anmeldung kann es sich bei "einem Polyetherpolyol" auch um eine Mischung unterschiedlicher Polyetherpolyole handeln, analog gilt dies für die weiteren hier aufgeführten Polyole.

Bei den erfindungsgemäß verwendbaren Polyetherpolyolen handelt es sich um die dem Fachmann bekannten, in der Polyurethansynthese einsetzbaren Polyetherpolyole.

Verwendbare Polyetherpolyole sind beispielsweise Polytetramethylenglykolpolyether, wie sie durch Polymerisation von Tetrahydrofuran mittels kationischer Ringöffnung erhältlich sind.

Ebenfalls geeignete Polyetherpolyole sind Additionsprodukte von Styroloxid, Ethylenoxid, Propylenoxid, Butylenoxid und/oder Epichlorhydrin an di- oder polyfunktionelle Startermoleküle. Insbesondere bevorzugt ist die Addition von Ethylenoxid und Propylenoxid. Geeignete Startermoleküle sind zum Beispiel Wasser, Ethylenglykol, Diethylenglykol, Butyldiglykol, Glycerin, Diethylenglykol, Trimethylolpropan, Propylenglykol, Pentaerythrit, Sorbit, Saccharose, Ethylendiamin, Toluoldiamin, Triethanolamin, Bisphenole, insbesondere 4,4'-Methylenbisphenol, 4,4'-(1-Methylethyliden)bisphenol, 1,4-Butandiol, 1,6-Hexandiol sowie niedermolekulare, Hydroxylgruppen aufweisende Ester derartiger Polyole mit Dicarbonsäuren sowie Oligoether derartiger Polyole.

Bevorzugt enthält die gegenüber Isocyanaten reaktive Zusammensetzung A) bezogen auf ihr Gesamtgewicht mindestens 50 Gew.-%, bevorzugt mindestens 60 Gew.-%, insbesondere bevorzugt mindestens 70 Gew.-% Polyetherpolyol. In einer bevorzugten Ausführungsform besteht die Komponente A1) zu 100 Gew.-% aus Polyetherpolyol. Diese bevorzugten Ausführungsformen zeichnen sich durch besonders gute Hydrolysestabilität aus.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit ≥ 4 bis ≤ 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit ≥ 1 bis ≤ 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole mit zahlenmittleren Molekulargewichten Mn von vorzugsweise ≥ 18 g/mol bis ≤ 400 g/mol, bevorzugt von ≥ 62 g/mol bis ≤ 200 g/mol wie 1,2-Ethandiol, 1,3-Propandiol, 1,2-Propandiol, 1,4-Butandiol, 1,5-Pentendiol, 1,5-Pentandiol, Neopentylglykol, 1,6- Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

Neben den Diolen können als Startermoleküle für die Herstellung der Polyether auch Verbindungen mit > 2 zerewitinoff-aktiven Wasserstoffen, besonders mit zahlenmittleren Funktionalitäten von > 2 bis ≤ 8, insbesondere von ≥ 3 bis ≤ 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole mit mittleren Molmassen Mn von vorzugsweise ≥ 62 g/mol bis ≤ 400 g/mol, insbesondere von ≥ 92 g/mol bis ≤ 200 g/mol.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Geeignete Polyesterpolyole sind unter anderem Polykondensate aus Di- sowie weiterhin Tri-, und Tetraolen und Di- sowie weiterhin Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden.

Beispiele für geeignete Diole sind Ethylenglykol, Butylenglykol, Diethylenglykol, Triethylenglykol, Polyalkylenglykole wie Polyethylenglykole, weiterhin 1,2-Propandiol, 1,3-Propandiol, 1,3-und 1,4-Butandiol, 1,6-Hexandiol und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxyethylisocyanurat eingesetzt werden.

Es können zusätzlich auch einwertige Alkanole mit verwendet werden.

Als Polycarbonsäuren können beispielsweise Phthalsäure, Isophthalsäure, Terephthalsäure, Tetrahydrophthalsäure, Hexahydrophthalsäure, Cyclohexandicarbonsäure, Adipinsäure, Azelainsäure, Sebacinsäure, Glutarsäure, Tetrachlorphthalsäure, Maleinsäure, Fumarsäure, Itaconsäure, Malonsäure, Korksäure, Bernsteinsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, oder Trimellithsäure eingesetzt werden. Als Säurequelle können auch die entsprechenden Anhydride verwendet werden.

Es können zusätzlich auch Monocarbonsäuren wie Benzoesäure und Alkancarbonsäuren mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierten Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Verwendbare Polycarbonatpolyole sind Hydroxylgruppen aufweisende Polycarbonate, zum Beispiel Polycarbonatdiole. Diese sind durch Reaktion von Kohlensäurederivaten, wie Diphenylcarbonat, Dimethylcarbonat oder Phosgen, mit Polyolen, bevorzugt Diolen, oder durch die Copolymerisation von Alkylenoxiden, wie zum Beispiel Propylenoxid, mit CO₂ erhältlich.

Beispiele derartiger Diole sind Ethylenglykol, 1,2- und 1,3-Propandiol, 1,3-und 1 ,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit CO₂ erhältlich sind.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2910585 A, [0024] - [0041], beschrieben. Beispiele zu Polycarbonatpolyolen und ihre Herstellung finden sich unter anderem in der EP 1359177 A. Die Herstellung geeigneter Polyetheresterpolyole ist unter anderem in der WO 2010/043624 A und in der EP 1 923 417 A beschrieben.

Polyetherpolyole, Polyethercarbonatpolyole und Polyetheresterpolyole mit einem hohen Anteil an primären OH-Funktionen werden erhalten, wenn die zur Alkoxylierung eingesetzten Alkylenoxide einen hohen Anteil an Ethylenoxid aufweisen. Insbesondere beträgt der molare Anteil an Ethylenoxidstrukturen, bezogen auf die Gesamtheit der in den Polyolen der Komponente A1 vorhandenen Alkylenoxidstrukturen, mindestens 50 mol%. Der Einsatz von 100 mol% Ethylenoxid ist ebenfalls eine bevorzugte Ausführungsform.

Weiterhin können in der gegenüber Isocyanaten reaktiven Zusammensetzung A) niedermolekulare gegenüber Isocyanaten reaktive Verbindungen A4) enthalten sein, insbesondere können di- oder trifunktionelle Amine und Alkohole, besonders bevorzugt Diole und/oder Triole mit Molmassen Mn kleiner als 400 g/mol, vorzugsweise von 60 bis 300 g/mol, zum Einsatz kommen, z.B. Triethanolamin, Diethylenglykol, Ethylenglykol, Glycerin. Sofern zur Herstellung der Polyurethanhartschaumstoffe solche niedermolekularen gegenüber Isocyanaten reaktiven Verbindungen Anwendung finden, z.B. in der Funktion als Kettenverlängerungsmittel und/oder Vernetzungsmittel, und diese nicht auch unter die Definition der Polyolkomponente A1) fallen, kommen diese zweckmäßigerweise in einer Menge von bis zu 5 Gew.-%, bezogen auf das Gesamtgewicht der Zusammensetzung A) zum Einsatz.

Neben den oben beschriebenen Polyolen und gegenüber Isocyanaten reaktiven Verbindungen können in der Zusammensetzung A) weitere gegenüber Isocyanaten reaktive Verbindungen A5) enthalten sein, beispielsweise Graft-Polyole, Polyamine, Polyaminoalkohole und Polythiole. Selbstverständlich umfassen die beschriebenen gegenüber Isocyanaten reaktiven Komponenten auch solche Verbindungen mit gemischten Funktionalitäten.

Eine bevorzugte gegenüber Isocyanaten reaktive Zusammensetzung A) umfasst die Polyolkomponente A1), die eine Hydroxylzahl von 280 bis 600 mg KOH/g und eine Funktionalität von ≥ 2,8 bis ≤ 6,0 aufweist, in einer Menge von mindestens 65 Gew.-%, insbesondere mindestens 80 Gew.-% und ganz besonders bevorzugt mehr als 90 Gew.-%, bezogen auf die Gesamtmenge an A) ausgenommen die Komponenten A2) und A3), und der Anteil an primären OH-Funktionen in der Zusammensetzung A) beträgt mindestens 35% (bezogen auf alle endständigen OH-Funktionen in der Zusammensetzung A).

In der Herstellung des PUR/PIR-Hartschaums wird als Treibmittelkomponente C) überkritisches CO₂ verwendet. Die Treibmittelkomponente C) wird in einer solchen Menge verwendet, wie sie zur Erzielung einer dimensionsstabilen Schaummatrix und der gewünschten Rohdichte nötig ist. In der Regel sind dies 0,5 - 30 Gewichtsteile Treibmittel bezogen auf 100 Gewichtsteile der Zusammensetzung A) ausgenommen A2) und A3).

Das CO₂ als physikalisches Treibmittel wird im überkritischen oder nahekritischen Zustand eingesetzt. Im Rahmen der vorliegenden Erfindung liegen nahekritische Bedingungen dann vor, wenn die folgende Bedingung erfüllt ist: (Tc - T)/T ≤ 0,4 und/oder (pc - p)/p ≤ 0,4. Hierbei bedeuten T die im Verfahren herrschende Temperatur, Tc die kritische Temperatur des Treibmittels oder Treibmittelgemisches, p der im Verfahren herrschende Druck und pc der kritische Druck für das Treibmittel oder Treibmittelgemisch. Vorzugsweise liegen nahekritische Bedingungen vor, wenn gilt: (Tc - T)/T ≤ 0,3 und/oder (pc - p)/p ≤ 0,3 und besonders bevorzugt (Tc - T)/T ≤ 0,2 und/oder (pc - p)/p ≤ 0,2.

Besonders geeignete Bedingungen für die Durchführung des erfindungsgemäßen Verfahrens bei Verwendung von CO₂ sind solche Drücke und Temperaturen oberhalb des kritischen Punktes von CO₂, also ≥ 73,7 bar und ≥ 30,9 °C, bevorzugt zwischen 74 bar und 350 bar sowie zwischen 31 °C und 100 °C, besonders bevorzugt zwischen 75 bar und 200 bar sowie zwischen 32 °C und 60 °C.

Als zusätzliche Treibmittel neben überkritischem CO₂ können physikalische Treibmittel eingesetzt werden. Unter "physikalischen Treibmitteln" werden im Rahmen der vorliegenden Erfindung solche Verbindungen verstanden, die aufgrund ihrer physikalischen Eigenschaften leicht flüchtig sind und nicht mit der Polyisocyanatkomponente B) reagieren.

Die zusätzlichen physikalischen Treibmittel können ausgewählt sein aus der Gruppe aus Kohlenwasserstoffen (z. B. n-Pentan, iso-Pentan, cyclo-Pentan, Butan, Isobutan, Propan), Ethern (z.B. Methylal), halogenierten Ethern, perfluorierten und teilfluorierten Kohlenwasserstoffen mit 1 bis 8 Kohlenstoffatomen, z. B. Perfluorhexan, HFC 245fa (1,1,1,3,3-Pentafluorpropan), HFC 365mfc (1,1,1,3,3-Pentafluorbutan), HFC 134a oder deren Mischungen verwendet, sowie (hydro)fluorierte Olefine, wie z.B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en), sowie deren Gemische untereinander.

Werden weitere Treibmittel zugesetzt, enthält die Treibmittelkomponente C) in einer Ausführungsform bevorzugt mehr als 60 Gew.-% überkritisches CO₂, besonders bevorzugt mehr als 75 Gew.-%.

Zusätzlich zu oder auch statt der physikalischen Treibmittel können auch chemische Treibmittel (auch "Co-Treibmittel") verwendet werden. Bei diesen handelt es sich besonders bevorzugt um Wasser und/oder Ameisensäure. Bevorzugt werden die Co-Treibmittel in einer Menge von 0 bis 6 Gew.-%, besonders bevorzugt von 0,5 bis 4 Gew.-%, bezogen auf die Gesamtmenge an Verbindungen mit gegenüber Isocyanatgruppen reaktiven Wasserstoffatomen in dem schaumbildenden Reaktionsgemisch R), eingesetzt.

Der Anteil des Treibmittels C) beträgt, jeweils bezogen auf die Gesamtmenge der Komponenten A) und C), bevorzugt ≥ 1 Gew.-% bis ≤ 30 Gew.-%, mehr bevorzugt ≥ 4 Gew.-% bis ≤ 20 Gew.-%., besonders bevorzugt ≥ 6 Gew.-% bis ≤ 16 Gew.-%; der Anteil des Treibmittels an dem Reaktionsgemisch R) beträgt 0,5 Gew.-% bis 15 Gew.-%, bevorzugt 2 Gew.-% bis 10 Gew.-%, besonders bevorzugt ≥ 3 Gew.-% bis ≤ 8 Gew.-%, jeweils bezogen auf die Gesamtmenge an R).

In einer weiteren Ausführungsform umfasst die gegenüber Isocyanaten reaktive Zusammensetzung A) eine Katalysatorkomponente A2), bevorzugt eine Katalysatorkomponente A2) in einer Menge von ≥ 0,01 bis < 2,0 Gew.-%, bezogen auf das Gesamtgewicht der gegenüber Isocyanaten reaktiven Zusammensetzung A).

Als Katalysatorkomponente A2) werden üblicherweise Verbindungen verwendet, welche die Reaktion der Hydroxylgruppen bzw. gegenüber Isocyanaten reaktiven Gruppen enthaltenden Verbindungen der Zusammensetzung A) mit den Isocyanatgruppen der Komponente B beschleunigen.

Die Katalysatorkomponente A2) kann A2a) mindestens eine katalytisch aktive Aminverbindung mit funktionellen Gruppen, welche über Zerewitinoff-aktive Wasserstoffe verfügen und daher mit Isocyanat reagieren können (sogenannte "einbaubare Katalysatoren"). Beispiele für einsetzbare einbaubare Katalysatoren sind beispielsweise Bis-dimethylaminopropylharnstoff, Bis(N,N-Dimethylaminoethoxyethyl)carbamat, Di-methylamino-propylharnstoff, N,N,N-Trimethyl-N-hydroxyethylbis(aminopropylether), N,N,N-Trimethyl-N-hydroxyethylbis(aminoethylether), Diethylethanolamin, Bis(N,N-dimethyl-3-aminopropyl)amin, Dimethylaminopropylamin, 3-Di-methyaminopropyl-N,N-dimethylpropan-1,3-diainin, Dimethyl-2-(2-amino-ethoxyethanol) und (1,3-Bis(dimethylamino)-propan-2-ol), N,N-Bis-(3-dimethylamino-propyl)-N-isopropanolamin, Bis-(dimethylaminopropyl)-2-hydroxyethyl-amin, N,N,N-Trimethyl-N-(3aminopropyl)-bis(aminoethylether), 3-Dimethylaminoisopropyl-diisopropanolamin oder Mischungen davon.

Daneben können eine oder mehrere weitere Verbindungen A2b), insbesondere die für die PUR/PIR-Chemie bekannten katalytisch aktiven Verbindungen eingesetzt werden, neben weiteren Aminverbindungen auch Salze wie z.B. Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylamino-propyl)-s-hexahydrotriazin, Tetramethyl-ammoniumhydroxid, Natriumacetat, Natriumoctoat, Kaliumacetat, Kaliumoctoat, Natriumhydroxid.

Die Katalysatorkomponente A2) wird im Allgemeinen in einer Menge von 0,001 bis 5 Gew.-%, insbesondere von 0,05 bis 2,5 Gew.-%, bezogen auf das Gewicht der Zusammensetzung A), eingesetzt. Besonders bevorzugt enthält die Katalysatorkomponente A2) sowohl einbaubare Katalysatoren A2a) als auch nicht einbaubare Katalysatoren A2b). Insbesondere ist es bevorzugt, dass einbaubare Aminverbindungen und katalytisch aktive Salze in Kombination eingesetzt werden.

Die Katalysatoren A2a) und A2b) werden bevorzugt in einem molaren Verhältnis A2a)/A2b) von 0,1 bis 16,3 eingesetzt, besonders bevorzugt von 0,3 bis 10 und ganz besonders bevorzugt von 0,8 bis 6,0. Die Katalysatorkomponente A2) enthält bevorzugt als katalytisch aktive Verbindung A2a) eine in das Polyurethan einbaubare Aminverbindung und weiterhin die katalytisch aktive Verbindung A2b), bei welcher es sich um ein nicht in das Polyurethan einbaubares, katalytisch aktives Salz handelt, und das molare Verhältnis von A2a)/A2b) beträgt 0,1 bis 16,3, besonders bevorzugt von 0,3 bis 10 und ganz besonders bevorzugt von 0,8 bis 6,0. In einer besonders bevorzugten Ausführungsform werden 3-(Dimethylamino)Propylharnstoff und Kaliumacetat in einem molaren Verhältnis A2a)/A2b) von 0,1 bis 6,0, besonders bevorzugt von 0,3 bis 10 und ganz besonders bevorzugt von 0,8 bis 6,0, eingesetzt. Die bevorzugten Katalysatorverhältnisse bzw. Katalysatoren wirken sich besonders günstig auf einen definierten Viskositätsaufbau aus.

In einer Ausführungsform weist die gegenüber Isocyanaten reaktive Zusammensetzung A) eine Hilfs- und Zusatzkomponente A3) auf, die einen Stabilisator umfasst, bevorzugt einen Stabilisator in einer Menge von ≥ 0,05 bis ≤ 5 Gew.-%, bezogen auf das Gesamtgewicht der gegenüber Isocyanaten reaktiven Zusammensetzung A), umfasst.

Das Reaktionsgemisch R) kann Hilfs- und Zusatzstoffe A3) enthalten. Die Hilfs- und Zusatzstoffe können zellöffnenden Verbindungen enthalten, umfassen jedoch bevorzugt im Wesentlichen keine oder sind frei von zellöffnenden Verbindungen. Zellöffnende Verbindungen sind beispielsweise im Kunststoff-Handbuch, Band 7, Polyurethane, Carl Hanser Verlag, München / Wien, 3. Auflage, 1993, Seiten 104-127 beschrieben. Es handelt sich beispielsweise um Silikone, wie Polyether-Polydimethylsiloxan-Copolymere, oder organische Polymere, z.B. solche auf Basis Polybutadien (z.B. Ortegol 500 und 501 von Evonik Industries), Tenside, wie z.B. das Natriumsalz von ethoxyliertem und sulfatisiertem Isotridecylalcohol, welches unter dem Handelsnamen Sermul EA266 (Elementis Specialties, Niederlande) erhältlich ist, sowie Mischungen unterschiedlicher Komponenten, z.B. Mischungen aus aminstabilisierten, makromolekularen, ungesättigten Kohlenwasserstoffen und Phthalsäureestern.

Weitere Hilfs- und Zusatzstoffe A3), die in dem erfindungsgemäßen Verfahren eingesetzt werden können, sind die aus dem Stand der Technik und dem Fachmann bekannten und üblichen Hilfs- und Zusatzstoffe. Genannt seien beispielsweise oberflächenaktive Substanzen, Stabilisatoren, insbesondere Schaumstabilisatoren, Zellregler, Füllstoffe, Farbstoffe, Pigmente, Flammschutzmittel, Antistatika, Hydrolyseschutzmittel und/oder fungistatisch und bakteriostatisch wirkende Substanzen.

Es werden häufig Polyether-Polydimethylsiloxan-Copolymere als Schaumstabilisatoren verwendet, vorzugsweise ein Polyethylenoxid-Polyether mit Oligodimethylsiloxan-Endgruppen, wobei die Zahl der Dimethylsiloxan-Einheiten vorzugsweise ≤ 5 ist.

Als Stabilisatoren können auch gesättigte und ungesättigte Kohlenwasserstoffe wie Paraffine, Polybutadiene, Fettalkohole sowie Ester, z.B. Ester von Carbonsäuren, eingesetzt werden. Bevorzugt werden solche Stabilisatoren, insbesondere Schaumstabilisatoren eingesetzt, die keine zellöffnende Wirkung haben.

Die Zusammensetzung A) enthält bevorzugt insgesamt maximal 3 Gew.-% Silikone und Polybutadiene, bezogen auf das Gesamtgewicht der Zusammensetzung A).

Weiterhin können als Stabilisatoren Tenside eingesetzt werden, beispielsweise alkoxylierte Alkanole wie Ether von linearen oder verzweigten Alkanolen mit ≥ 6 bis ≤ 30 Kohlenstoffatomen mit Polyalkylenglykolen mit ≥ 5 bis ≤ 100 Alkylenoxideinheiten, alkoxylierte Alkylphenole, alkoxylierte Fettsäuren, Carbonsäureester eines alkoxylierten Sorbitans (insbesondere Polysorbat 80), Fettsäureester, Polyalkylenamine, Alkylsulfate, Phosphatidylinositole, fluorierte Tenside, Polysiloxangruppen umfassende Tenside und/oder Bis(2-ethyl-1-hexyl)sulfosuccinat. Fluorierte Tenside können perfluoriert oder teilfluoriert sein. Beispiele hierfür sind teilfluorierte ethoxylierte Alkanole oder Carbonsäuren.

Bevorzugt enthält die Zusammensetzung A) insgesamt maximal 5 Gew.-% Tenside, insbesondere bevorzugt maximal 3 Gew.-%, mehr bevorzugt weniger als 2 Gew.-% und insbesondere bevorzugt maximal 1,6 Gew.-% an Tensiden, bezogen auf das Gesamtgewicht der Zusammensetzung A).

Das Reaktionsgemisch R) umfasst eine Polyisocyanatkomponente B), also ein Isocyanat mit einer NCO-Funktionalität von ≥ 2, wobei die Polyisocyanatkomponente B) in einer Menge eingesetzt wird, so dass die Isocyanat-Kennzahl wenigstens 110 beträgt und/oder die Polyisocyanatkomponente B) eine Viskosität bei 25 °C von ≥ 400 mPa·s und einen NCO-Gehalt ≤ 31,3% aufweist.

Wird die Polyisocyanatkomponente B) in einer Menge eingesetzt, so dass die Isocyanat-Kennzahl wenigstens 110 beträgt, kann es sich bei den geeigneten Polyisocyanaten beispielsweise um 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe, 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen handeln.

Als Isocyanatkomponente B) werden in diesem Fall bevorzugt Mischungen der Isomeren des Diphenylmethandiisocyanats ("monomeres MDI", abgekürzt "mMDI") und dessen Oligomeren ("oligomeres MDI") eingesetzt. Mischungen aus monomerem MDI und oligomerem MDI werden allgemein als "polymeres MDI" (pMDI) bezeichnet. Die Oligomere des MDI sind höherkernige Polyphenyl-polymethylen-polyisocyanate, d.h. Gemische der höherkernigen Homologen des Diphenyl-methylen-diisocyanates, welche eine NCO-Funktionalität f > 2 aufweisen und folgende Strukturformel aufweisen: C15H10N2O2 [C8H5NO]n, wobei n = ganze Zahl > 0, bevorzugt n = 1, 2, 3 und 4, ist. Höherkernige Homologe C15H10N2O2 [C8H5NO]m, m = ganze Zahl ≥ 4) können ebenfalls im Gemisch aus organischen Polyisocyanaten a) enthalten sein. Als Isocyanatkomponente B) weiterhin bevorzugt sind Mischungen aus mMDI und/oder pMDI mit maximal bis zu 20 Gew.-%, mehr bevorzugt maximal 10 Gew.-% an weiteren, für die Herstellung von Polyurethanen bekannten aliphatischen, cycloaliphatischen und insbesondere aromatischen Polyisocyanaten, ganz besonders TDI.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

Statt oder zusätzlich zu den oben genannten Polyisocyanaten können auch geeignete NCO-Präpolymere als organische Isocyanatkomponente B) eingesetzt werden. Die Präpolymere sind herstellbar durch Umsetzung eines oder mehrerer Polyisocyanate mit einem oder mehreren Polyolen, entsprechend den unter den Komponenten A1) und A2) beschriebenen Polyolen.

Es ist möglich, dass das Isocyanat ein Präpolymer ist, welches erhältlich ist durch Reaktion eines Isocyanats mit einer NCO-Funktionalität von ≥ 2 und Polyolen mit einem Molekulargewicht von ≥ 62 g/mol bis ≤ 8000 g/mol und OH-Funktionalitäten von ≥ 1,5 bis ≤ 6.

Der NCO-Gehalt beträgt bevorzugt von ≥ 29,0 Gew.-% bis ≤ 32,0 Gew.%, und weist bevorzugt eine Viskosität bei 25 °C von ≥ 80 mPa·s bis ≤ 2000 mPa·s, besonders bevorzugt von ≥ 100 mPa·s bis ≤ 800 mPa·s auf (dynamische Viskosität bestimmt nach DIN 53019, bei 25°C).

Wird eine Polyisocyanatkomponente B) eingesetzt, die eine Viskosität bei 25 °C von ≥ 400 mPa·s und einen NCO-Gehalt ≤ 31,3% aufweist können alle vorgenannten Isocyanate eingesetzt werden, die gleichzeitig die Bedingungen der Viskosität bei 25 °C von ≥ 400 mPa·s und einem NCO-Gehalt ≤ 31,3% erfüllen.

Die Anzahl der NCO-Gruppen in der Polyisocyanatkomponente B) und die Anzahl der gegenüber Isocyanaten reaktiven Gruppen der Komponente A) können in diesem Fall beispielsweise in einem Zahlenverhältnis von ≥ 50:100 bis ≤ 300:100 zueinander stehen. Zur Herstellung der Polyurethan-Hartschaumstoffe werden in der Regel die Komponenten A) und B) in solchen Mengen zur Umsetzung gebracht, dass die Isocyanat-Kennzahl der Rezeptur 80 - 150, bevorzugt 105 - 135, besonders bevorzugt 110 - 125 beträgt. In diesem Bereich werden bevorzugt Urethangruppen gebildet. In einer anderen bevorzugten Ausführungsform beträgt die Isocyanat-Kennzahl 150 - 400. In diesem Bereich weisen die Schaumstoffe einen hohen Anteil an Isocyanurat-Funktionen auf, welche z.B. eine inhärente Flammwidrigkeit der Schaumstoffe bewirken.

Wenigstens besteht das erfindungsgemäße Verfahren aus den Schritten i. bis iv.

Im Schritt i. des erfindungsgemäßen Verfahrens wird das Reaktionsgemisch R) aus den Komponenten A), B) und C) hergestellt.

Hierfür kann die Zusammensetzung A) beispielsweise in einem Kessel vorgelegt werden, anschließend mit der Treibmittelkomponente C) vermischt werden und mit dem Polyisocyanat B) versetzt werden. Die Vermischung der Komponenten kann auch in einem Mischkopf erfolgen.

Die Vermischung, insbesondere mit den Komponenten C) und B), kann unter Druck erfolgen. In einer bevorzugten Ausführungsform werden die Komponenten A) und C) mit der Komponente B) in einem Hochdruck-Mischkopf vermischt.

Es handelt sich bei der Treibmittelkomponente C) um CO₂ im überkritischen Zustand und die Umsetzung der Komponenten findet vorzugsweise unter für CO₂ überkritischen Bedingungen statt. In diesem Fall sind geeignete Drücke im Mischkopf und/oder in der Austragsleitung bzw. den Austragsleitungen für die Herstellung des Polyurethanschaums beispielsweise im Bereich von ≥ 73,7 bar bis ≤ 350 bar und vorzugsweise im Bereich von ≥ 75 bar bis ≤ 200 bar. Geeignete Temperaturen sind beispielsweise ≥ 30,9 °C bis ≤ 100 °C und vorzugsweise ≥ 32 °C bis ≤ 60 °C. Bei solchen Drücken können überkritische Bedingungen für das eingesetzte Treibmittel aufrechterhalten werden.

In einer weiteren Ausführungsform beträgt die Verweilzeit der Mischung im Mischkopf unter überkritischen Bedingungen des Treibmittels > 0 Sekunden bis ≤ 20 Sekunden, bevorzugt von ≥ 0,1 Sekunden bis ≤ 10 Sekunden und besonders bevorzugt von ≥ 0,5 Sekunden bis ≤ 5 Sekunden. Dies führt dazu, dass die Mischung unter überkritischen Bedingungen polymerisieren kann. Die Verweilzeit kann durch das Volumen der Reaktionskammer (=Mischkammer und/oder Rohrleitungen), in der überkritische Bedingungen herrschen, geteilt durch das Volumen der Mischung, die in einer bestimmten Zeiteinheit gefördert wird, bestimmt werden.

In Schritt ii. des erfindungsgemäßen Verfahrens wird das erfindungsgemäße Reaktionsgemisch R) aus den Komponenten A), B) und C) in eine geschlossene Form eingebracht, wobei ein Gegendruck in der Form während des Einbringens 2,0 - 90 bar, bevorzugt 2,0 - 80 bar, besonders bevorzugt 5,0 - 40 bar beträgt.

Mögliche Ausführungsformen hierfür sind die folgenden: der Gegendruck wird durch Beaufschlagung der Form mit Gas (Druckluft bzw. Stickstoff) entweder direkt (bevorzugt) und/oder durch eine schwimmende Dichtung, die den druckbeaufschlagten Raum in Gas- und Reaktionsraum unterteilt (weniger bevorzugt), erreicht, und über ein Proportionalventil eingestellt, gehalten und letztlich entlastet.

In Schritt iii. des Verfahrens lässt man das Reaktionsgemisch aufschäumen.

Eine bevorzugte Ausführungsform des Schritts iii) die folgende: der Gegendruck in der Form wird nach Ende des Schritts ii. für einen Zeitraum 1, welcher bevorzugt 1 - 40 Sekunden, besonders bevorzugt 2 - 30 Sekunden und ganz besonders bevorzugt 3 - 20 Sekunden beträgt, konstant gehalten, wobei die Viskosität des Reaktionsgemischs zunächst ohne Aufschäumen des Reaktionsgemischs ansteigt. Es hat sich gezeigt, dass das Halten des Druckes während der bevorzugten Zeitdauer in besonders günstigen Viskositätsbereichen des Gemischs für diesen Reaktionsabschnitt resultiert. Nach Beendigung des Zeitraums 1 wird die Form entspannt. Die Entlastung des Drucks aus der Form erfolgt innerhalb eines Zeitraums 2, mit einer Druckentlastungsrate von 1-90 bar/s, bevorzugt 1-80 bar/s, besonders bevorzugt 2-70 bar/s. Die Entlastung kann insbesondere über ein Proportionalventil erfolgen. Während des Zeitraums 2 schäumt das Reaktionsgemisch auf. Eine zu schnelle Entlastung wirkt sich negativ auf die Zellstabilität, eine zu langsame Entlastung negativ auf die Aufschäumreaktion aus.

In Schritt iv. des Verfahrens wird der PUR/PIR-Hartschaumstoff entformt.

Gegenstand der vorliegenden Erfindung ist auch ein offenzelliger PUR/PIR-Hartschaumstoff, der durch das erfindungsgemäße Verfahren erhältlich ist oder erhalten wird. Der erfindungsgemäße Schaumstoff weist gute mechanische Eigenschaften, insbesondere gute Dimensionsstabilität unter erhöhter Temperatur und bevorzugt auch gute Druckfestigkeit auf.

Bevorzugt weist dieser offenzellige PUR/PIR-Hartschaumstoff eine Rohdichte von 30 - 90 kg/m³, bevorzugt 30 - 70 kg/m³, gemäß ISO 845:2006 eine Offenzelligkeit von > 90%, bevorzugt ≥ 94%, gemäß ISO 4590:2002 und einen durchschnittlichen (arithmetisch gemittelt) Zelldurchmesser von 70 - 130 µm gemäß lichtmikroskopischer Auswertung auf.

Aus den erfindungsgemäßen PUR/PIR-Schaumstoffen lassen sich in bevorzugter Weise geschäumte Formkörper und Verbundsysteme enthaltend diese Formkörper herstellen. Die Verbundsysteme sind oft sowohl an der Ober- als auch an der Unterseite durch Dekorschichten begrenzt. Als Dekorschichten kommen unter anderem Metalle, Kunststoffe, Holz und Papier in Frage. Als Anwendungsgebiete solcher diskontinuierlich hergestellten PUR/PIR-Verbundsysteme sind insbesondere zu nennen die technische Isolierung von Geräten wie Kühlschränken, Kühltruhen, Kühlgefrierkombinationen und Boilern, Kühlcontainern und Kühlboxen sowie von Rohren.

Der Einsatz von PUR/PIR-Schaumstoffen auf diesen Gebieten ist dem Fachmann grundsätzlich bekannt und wurde schon vielfach beschrieben. Die erfindungsgemäßen PUR/PIR-Schaumstoffe eignen sich außerordentlich gut für diese Zwecke, da sie sich durch hohe Dimensionsstabilität und vorteilhafter Weise auch durch hohe Druckfestigkeit und geringe Wärmeleitzahlen, die durch das Anlegen von Vakuum noch weiter gesteigert werden können, auszeichnen.

Weiterhin ist Gegenstand der Erfindung ein Vakuumisolationspaneel enthaltend einen PUR/PIR-Hartschaumstoff erhältlich gemäß dem erfindungsgemäßen Verfahren.

Schließlich ist auch Gegenstand der Erfindung ein Kühlschrank, Gefrierschrank oder eine Kühl-Gefrierkombination enthaltend einen PUR/PIR-Hartschaumstoff erhältlich gemäß dem erfindungsgemäßen Verfahren oder ein erfindungsgemäßes Vakuumisolationspaneel.

In dieser Anmeldung verwendete Bezeichnungen haben die folgende Bedeutung:
Unter dem Index (auch Isocyanat-Index, Isocyanat-Kennzahl, oder Kennzahl genannt) wird der Quotient aus der tatsächlich eingesetzten Stoffmenge [mol] an Isocyanat-Gruppen und der tatsächlich eingesetzten Stoffmenge [mol] an gegenüber Isocyanaten reaktiven Wasserstoffatomen, multipliziert mit 100, verstanden:
Index = (Isocyanat-Gruppen [mol] / gegenüber Isocyanaten reaktive Wasserstoffatome [mol]) · 100

Mit "Funktionalität" oder "f" einer Verbindung ist im Sinne dieser Anmeldung die theoretische Funktionalität gemeint: so beträgt die Funktionalität eines ausschließlich Glycerin-gestarteten Polyols f = 3, die eines ausschließlich Ethylendiamin-gestarteten Polyols f= 4. Mit "Funktionalität" oder "f" einer Komponentenmischung ist im Sinne dieser Anmeldung jeweils die zahlengemittelte Funktionalität der Mischung gemeint, auf die sich die Angabe bezieht. Mit Funktionalität der PolyolKomponente A1) ist somit beispielsweise die zahlenmittlere Funktionalität der Mischung aus den in der Komponente A1 enthaltenden Polyolen in Bezug auf alle enthaltenen gegenüber Isocyanaten reaktiven Wasserstoffatomen gemeint.

Mit "Molgewicht" oder "Molmasse" bzw. "Mn" ist im Sinne dieser Anmeldung jeweils die zahlengewichtete mittlere Molmasse gemeint.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240-2, Stand November 2007.

Die Erfindung soll anhand der nachfolgenden Beispiele und Vergleichsbeispiele näher erläutert werden, ohne dass sie in ihrem Umfang durch die Beispiele eingeschränkt wird.

Beispiele:
Verwendete Normen bzw. Messgeräte:
Bestimmung der Rohdichte: Schaumstoffe aus Kautschuk und Kunststoffen - Bestimmung der Rohdichte (ISO 845:2006); Deutsche Fassung EN ISO 845:2009
Bestimmung der Offenzelligkeit: Bestimmung des Volumenanteils offener und geschlossener Zellen (ISO 4590:2002); Deutsche Fassung EN ISO 4590:2003
Bestimmung der OH-Zahl: Die Bestimmung der Hydroxylzahl - Teil 2: Verfahren mit Katalysator gemäß DIN 53240-2, Stand November 2007
Bestimmung der Dimensionsstabilität: Platten aus Hartschaum einer definierten Größe, zB Breite × Tiefe × Höhe ist 20×20×2 cm³ (Höhe beträgt ca. 10 - 40% der Breite) werden in einem Folienbeutel evakuiert und versiegelt. Der Innendruck des Folienbeutels mit Schaumplatte ist geringer als 30 mbar. Der evakuierte und versiegelte Beutel wird in einem Trockenschrank bei einer Temperatur von 60 °C gelagert. In regelmäßigen Abständen werden Abweichungen der Dimensionen von den direkt nach dem Versiegeln gemessenen Dimensionen (in mm) und Änderungen der optischen Beschaffenheit der Oberfläche bestimmt (Vertiefungen in mm gemessen). Bei Abweichungen > 10% in Breite, Tiefe oder Höhe und Vertiefungen > 10%, welche nach 24 h Lagerung bei 60 °C entstehen, gilt die Schaumplatte als nicht dimensionsstabil. Die Angabe "Ja" in Tabelle 1 bedeutet hierbei, dass der jeweilige Mangel an Dimensionsstabilität (Abweichungen der Dimensionen bzw. Vertiefungen auf der Oberfläche) vorliegt.

Bestimmung der Zellgröße: Lichtmikroskopische Auswertung via Lichtmikroskop VHX 5000; der zu vermessende Probekörper wird an drei unterschiedlichen Stellen jeweils über einen kreisförmigen Bereich mit einem Durchmesser von 5 mm untersucht. Hierbei wird die Auflösung so gewählt, dass der ausgewählte Bereich mehr als 100 Zellen erfasst. Danach werden alle Zellen mit der frei erhältlichen Software ImageJ ausgewertet und aus den erhaltenen ECD Werten (Equivalent Circle Diameter) der arithmetisch gemittelte Zelldurchmesser berechnet.

Die Angabe der durchschnittlichen Funktionalität f in Tabelle 1 bezieht sich auf die zahlenmittlere Funktionalität der Mischung aus den in der Formulierung enthaltenden Polyolen.

Die Angabe des Anteils an primären OH-Funktionen in [%] in Tabelle 1 bezieht sich auf den Anteil an primären OH-Funktionen an der Gesamtzahl der OH-Funktionen in der Mischung aus den in der Formulierung enthaltenden Polyolen.

Beispiele 1 bis 3 sowie Vergleichsbeispiel 1:
Gemäß den in der nachfolgenden Tabelle 1 aufgeführten Rezepturen wurden mit überkritischem CO₂ getriebene Polyurethanschaumstoffe hergestellt. Wenn nicht anders vermerkt, sind Mengenangaben als Gewichtsteile zu verstehen. Es kamen folgende Stoffe zum Einsatz:
- Polyol 1:: Trimethylol-initiiertes Polyetherpolyol mit Propylenoxid als Alkylenoxid mit einer Hydroxylzahl von 800 mg KOH/g, einer Funktionalität von 3 und einer Viskosität bei 25 °C von 6100 mPa·s
- Polyol 2:: Trimethylol-initiiertes Polyetherpolyol mit Ethylenoxid als Alkylenoxid mit einer Hydroxylzahl von 550 mg KOH/g, einer Funktionalität von 3 und einer Viskosität bei 25 °C von 505 mPa·s
- Polyol 3:: Ethylenglykol- und Sucrose-initiiertes Polyetherpolyol mit Propylenoxid als Alkylenoxid mit einer Hydroxylzahl von 440 mg KOH/g, einer Funktionalität von 2,8 und einer Viskosität bei 25 °C von 450 mPa·s
- Polyol 4:: 1,2-Propandiol-initiiertes Polyetherpolyol mit Propylenoxid als Alkylenoxid mit einer Hydroxylzahl von 56 mg KOH/g, einer Funktionalität von 2 und einer Viskosität bei 25 °C von 310 mPa·s
- Polyol 5:: 1,2 Propandiol-initiiertes Polyetherpolyol mit Propylenoxid als Alkylenoxid mit einer Hydroxylzahl von 112 mg KOH/g, einer Funktionalität von 2 und einer Viskosität bei 25 °C von 140 mPa·s
- Polyol 6:: Glycerin-initiiertes Polyetherpolyol mit Propylenoxid als Alkylenoxid mit einer Hydroxylzahl von 231 mg KOH/g, einer Funktionalität von 3 und einer Viskosität bei 25 °C von 350 mPa·s
- Tegostab B 8443:: Polyetherpolydimethylsiloxan-Copolymer-Schaumstabilisator (Evonik).
- Desmorapid PU 1792:: Katalysator, Kaliumacetat in Diethylenglykol (Covestro)
- Amin ZZ:: Katalysator, N'-(3-(Dimethylamino)propyl)-N,N-dimethylpropan-1,3-diamin, AirProducts
- Isocyanat 1:: Gemisch aus MDI und PMDI mit einer Funktionalität von ca. 2,8, einem NCO-Gehalt von ca. 31,5% und einer Viskosität bei 25 °C von ca. 200 mPa·s (Desmodur 44V20L, Covestro)
- Isocyanat 2:: Gemisch aus MDI und PMDI mit einer Funktionalität von ca. 3,0, einem NCO-Gehalt von ca. 31,2% und einer Viskosität bei 25 °C von ca. 685 mPa·s (Desmodur 44V70L, Covestro)

Herstellung von Polyurethanformschäumen auf einer Hochdruckanlage:
Zur Herstellung von Polyurethanformschäumen auf einer Hochdruckanlage wurde eine Polyolformulierung aus den in der nachfolgenden Tabelle 1 aufgeführten gegenüber Isocyanaten reaktiven Verbindungen, Stabilisatoren, Katalysatoren hergestellt. Diese wurde in einer Standard-Hochdruckmischanlage als Polyolkomponente eingesetzt und bei einem Druck von 160 bar und einer Temperatur von 35 °C mit CO₂ vermischt. Hierbei herrschten für das Treibmittel überkritische Bedingungen (überkritisches CO₂, auch "scCO₂"). In einem Hochdruckmischkopf wurde diese Mischung mit einem Polyisocyanat, das mit einem Druck von 160 bar und einer Temperatur von 35 °C gefördert wurde, vermischt. Die Schussmenge betrug 1000 g/s, entsprechend einem Volumenstrom von 833 ml/s (Dichte der Mischung 1,2 g/ml). Das so erhaltene Reaktionsgemisch wurde in eine mit 11 bar Gegendruck vorgespannte geschlossene Form mit einer Formtemperatur von 55 °C dosiert. Nach Ende der Injektion wurde der vorgespannte Gegendruck noch für weitere 8 s gehalten und erst dann schlagartig innerhalb von < 2 Sekunden auf Umgebungsdruck entspannt und der so hergestellte Formkörper nach 10 Minuten aus der Form entformt.

Der Vergleich der Beispiele 1-3 mit dem Vergleichsbeispiel 1 zeigt, dass die Wahl der passenden Kennzahl und/oder des Isocyanats mit geeigneter Viskosität und NCO-Gehalt die Dimensionsstabilität der resultierenden Hartschaumstoffe bei Lagerung bei erhöhter Temperatur in einem evakuierten Beutel bestimmt:
Vergleichsbeispiel 1 ergibt einen Hartschaumstoff, der nach 24 h Lagerung bei 60 °C starke Deformationen zeigt: seine Dimensionen weichen um mehr als 10% von den Dimensionen direkt nach dem Versiegeln, das heißt vor der Lagerung bei 60 °C, ab. Die Schaumstoffe der Beispiele 1 - 3 sind nach 24 h Lagerung bei 60 °C stabil in ihren Dimensionen, wobei das Beispiel 3 nach Lagerung besonders gute, auch gegenüber Beispiel 2 und 3 verbesserte, Oberflächenbeschaffenheiten aufweist.

**Tabelle 1**

| | | Vergl.-Beispiel 1 | Beispiel 1 | Beispiel 2 | Beispiel 3 |
|---|---|---|---|---|---|
| Polyol 1 | | 13,00 | 13,00 | 13,00 | 13,00 |
| Polyol 2 | | 32,50 | 32,50 | 32,50 | 32,50 |
| Polyol 3 | | 5,50 | 5,50 | 5,50 | 5,50 |
| Polyol 4 | | 13,50 | 13,50 | 13,50 | 13,50 |
| Polyol 5 | | 4,00 | 4,00 | 4,00 | 4,00 |
| Polyol 6 | | 27,00 | 27,00 | 27,00 | 27,00 |
| Tegostab B 8443 | | 2,00 | 2,00 | 2,00 | 2,00 |
| Desmorapid PU 1792 | | 2,00 | 2,00 | 2,00 | 2,00 |
| Amin ZZ | | 0,65 | 0,65 | 0,65 | 0,65 |
| Isocyanat 1 | | 97,7 | 119,3 | | |
| Isocyanat 2 | | | | 97,7 | 119,3 |
| scCO₂ | | 6,0 | 6,6 | 6,0 | 6,6 |
| | | | | | |
| durchschnittliche Funktionalität f | | 2,9 | 2,9 | 2,9 | 2,9 |
| primäre OH-Funktionen [%] | | 45 | 45 | 45 | 45 |
| Index | | 100 | 120 | 100 | 120 |
| | | | | | |
| Mechanik | | | | | |
| Rohdichte [kg/m³] | | 43 | 44 | 44 | 44 |
| | | | | | |
| Offenzelligkeit [%] | | 97 | 97 | 97 | 97 |
| Zellgröße (arithmetisches Mittel) [µm] | | 109 | 99 | 101 | 104 |
| Dimensionsstabilität nach 24 h Lagerung bei 60 °C | Abweichung zur Dimension (BxTxH) direkt nach Versiegeln | ja, > 10% | nein, < 10% | nein, 0-5% | nein, 0-5% |
| | Vertiefungen auf der Oberfläche | Ja, > 10% von Höhe | Ja, 5 - 10% von Höhe | Ja, 5 - 10% von Höhe | nein |

## Patentansprüche

1. Verfahren zur Herstellung eines PUR/PIR-Hartschaumstoffs umfassend die Schritte
i. Herstellen eines Reaktionsgemischs R) umfassend
- eine gegenüber Isocyanaten reaktive Zusammensetzung A) umfassend
eine Polyolkomponente A1) mit einer Funktionalität f von > 2,5 umfassend wenigstens ein Polyetherpolyol, Polyesterpolyol, Polycarbonatpolyol, Polyether-Polycarbonatpolyol, Polyetheresterpolyol, oder Mischungen daraus,
gegebenenfalls eine Katalysatorkomponente A2),
gegebenenfalls eine Hilfs- und Zusatzkomponente A3);
- eine Polyisocyanatkomponente B); und
- eine Treibmittelkomponente C) umfassend CO₂ im überkritischen Zustand,
ii. Einbringen des Reaktionsgemischs R) aus Schritt i. in eine geschlossene Form, wobei ein Gegendruck in der geschlossenen Form während des Einbringens 2,0-90 bar beträgt,
iii. Aufschäumenlassen des Reaktionsgemischs R) in der geschlossenen Form, um den PUR/PIR-Hartschaumstoff zu erhalten und
iv. Entformen des PUR/PIR-Hartschaumstoffs,
wobei die Polyisocyanatkomponente B) in einer Menge eingesetzt wird, so dass die Isocyanat-Kennzahl wenigstens 110 beträgt und/oder die Polyisocyanatkomponente B) eine Viskosität bei 25 °C von ≥ 400 mPa·s und einen NCO-Anteil ≤ 31,3% aufweist.

2. Verfahren gemäß Anspruch 1, wobei die Anzahl der NCO-Gruppen in der Polyisocyanatkomponente B) und die Anzahl der gegenüber Isocyanaten reaktiven Wasserstoffatome der gegenüber Isocyanaten reaktiven Zusammensetzung A) in einem Zahlenverhältnis von ≥ 110:100 bis ≤ 300:100 zueinander stehen.

3. Verfahren gemäß Anspruch 1 oder 2, wobei der Anteil aller in der Polyolkomponente A1) vorhandenen primären OH-Funktionen an der Gesamtzahl der endständigen OH-Funktionen in der Polyolkomponente A1) mindestens 30% beträgt.

4. Verfahren gemäß einem der Ansprüche 1 bis 3, wobei das Reaktionsgemisch R) im Wesentlichen frei ist von zellöffnenden Verbindungen oder keine zellöffnenden Verbindungen enthält.

5. Verfahren gemäß einem der Ansprüche 1 bis 4, wobei Schritt i) sowie gegebenenfalls ii) unter für das CO₂ überkritischen Bedingungen stattfindet.

6. Verfahren gemäß einem der Ansprüche 1 bis 5, wobei in Schritt iii. der Gegendruck für einen Zeitraum 1 von 1 - 40 s nach Ende des Schritts ii. gehalten wird und anschließend der Gegendruck während eines Zeitraums 2 mit einer Druckentlastungsrate von 1 - 90 bar/s entlastet wird.

7. Verfahren gemäß einem der Ansprüche 1 bis 6, wobei die Polyolkomponente A1) eine Hydroxylzahl von 280 - 600 mg KOH/g, gemessen nach DIN 53240-2:2007, aufweist.

8. Verfahren gemäß einem der Ansprüche 1 bis 7, wobei die gegenüber Isocyanaten reaktive Zusammensetzung A) zu mindestens 65 Gew.-% aus der Polyolkomponente A1) besteht, die eine Hydroxylzahl zwischen 280 bis 600 mg KOH/g, gemessen nach DIN 53240-2:2007, und eine Funktionalität von ≥ 2,8 bis ≤ 6,0 aufweist, und der Anteil der in der gegenüber Isocyanaten reaktiven Zusammensetzung A) vorhandenen primären OH-Funktionen an der Gesamtzahl aller endständigen OH-Funktionen in der gegenüber Isocyanaten reaktiven Zusammensetzung A mindestens 35% beträgt.

9. Verfahren gemäß einem der Ansprüche 1 bis 8, wobei die gegenüber Isocyanaten reaktive Zusammensetzung A) zu mindestens 60 Gew.-% aus Polyetherpolyol besteht.

10. Verfahren gemäß einem der Ansprüche 1 bis 9, wobei der Gehalt an Treibmittelkomponente C) 0,5 Gew.-% bis 15 Gew.-%, bezogen auf das Gesamtgewicht von R), beträgt.

11. Verfahren gemäß einem der Ansprüche 1 bis 10, wobei die gegenüber Isocyanaten reaktive Zusammensetzung A) eine Katalysatorkomponente A2) umfasst, bevorzugt eine Katalysatorkomponente A2) in einer Menge von ≥ 0,01 bis < 2,0 Gew.-%, bezogen auf das Gesamtgewicht der gegenüber Isocyanaten reaktiven Zusammensetzung A), umfasst.

12. Verfahren gemäß einem der Ansprüche 1 bis 11, wobei die gegenüber Isocyanaten reaktive Zusammensetzung A) eine Hilfs- und Zusatzkomponente A3 aufweist, die einen Stabilisator umfasst, bevorzugt einen Stabilisator in einer Menge von ≥ 0,05 bis ≤ 5 Gew.-%, bezogen auf das Gesamtgewicht der gegenüber Isocyanaten reaktiven Zusammensetzung A), umfasst.

13. Offenzelliger PUR/PIR-Hartschaumstoff, der durch das Verfahren gemäß einem der Ansprüche 1 bis 12 erhältlich ist.

14. Vakuumisolationspaneel enthaltend einen PUR/PIR-Hartschaumstoff gemäß Anspruch 13.

15. Kühlschrank, Gefrierschrank oder Kühl-Gefrierkombination, enthaltend einen PUR/PIR-Hartschaumstoff gemäß Anspruch 13 oder ein Vakuumisolationspaneel gemäß Anspruch 14.
